# FASCICULE DE BREVET EUROPEEN

(11) **EP 3 155 604 B1**
(45) Date de publication et mention de la délivrance du brevet: **18.03.2020**
(21) Numéro de dépôt: 15736548.7
(22) Date de dépôt: 16.06.2015
(51) Int. Cl.: G09B 5/02, G09B 19/00, G09B 19/24

(54) **MAQUETTE TUTORIELLE COMPRENANT UN GABARIT D'ASSISTANCE**
TUTORIALMODELL MIT EINER ASSISTENZVORLAGE
TUTORIAL MODEL COMPRISING AN ASSISTANCE TEMPLATE

(30) Priorité: 16.06.2014 FR 1455505
(43) Date de publication de la demande: 19.04.2017
(73) Titulaire: Huet, Antoine, 54340 Pompey (FR)
(72) Inventeur: Huet, Antoine, 54340 Pompey (FR)
(74) Mandataire: Icosa
(86) Numéro de dépôt international: PCT/FR2015/051590
(87) Numéro de publication internationale: WO 2015/193605

(56) Documents cités:
- WO-A1-00/03371
- WO-A1-2006/108236
- FR-A1- 2 917 224
- US-A1- 2005 010 952
- US-A1- 2013 171 596

## Description

### DOMAINE DE L'INVENTION

La présente invention concerne le domaine de l'image. Elle porte plus particulièrement sur la mise à disposition à un utilisateur d'une maquette tutorielle comprenant au moins un gabarit d'assistance à l'enregistrement d'au moins un plan, ladite maquette permettant de réaliser des rushes intégrables dans un squelette, tel que défini dans la présente invention, pour former un film ou une succession d'images ou une image personnalisé(e). L'invention comprend également la mise à disposition à l'utilisateur d'un film ou d'une succession d'images ou d'une image personnalisé(e), dans lequel les rushes qu'il a enregistrés sont intégrés.

### ÉTAT DE LA TECHNIQUE

Le secteur des dispositifs vidéo et photographiques personnalisés, tels que des caméras compactes et smartphones, a connu une croissance exponentielle ces dernières années. L'image vidéo a également acquis, auprès du grand public, un pouvoir croissant, dont rend parfaitement compte l'utilisation de vecteurs comme YouTube. Les smartphones, en particulier, sont des outils attractifs, simples, ludiques et à la portée de tous, permettant de créer des vidéos et photographies personnelles.

Le Demandeur a identifié que ces outils pouvaient avoir un intérêt fort pour répondre à un certain nombre de besoins de l'entreprise, notamment à des fins sociales, de sécurité ou de formation. Dans le domaine de la sécurité, par exemple, l'utilisation de vidéo pourrait, selon le Demandeur, résoudre un certain nombre de difficultés techniques survenant notamment dans les unités de production.

Toutefois, si la mise à disposition d'un appareil mobile de vidéo ou de photographie est à la portée de tous, la simple prise de séquences vidéo ou de photographies ne permet pas de répondre au problème technique, qui est l'industrialisation de la personnalisation, ou comment personnaliser l'apprentissage d'une procédure, au moyen d'un outil de série. Le problème technique peut également se définir comme l'obtention de l'observance, par un utilisateur, à une procédure, ladite observance passant généralement par l'apprentissage de ladite procédure. En particulier, dans le domaine de la sécurité, il existe un besoin d'assurer la bonne réalisation des gestes de sécurité par les utilisateurs. Il existe donc un besoin pour un outil qui permette l'acquisition de gestes de sécurité par un utilisateur.

La solution de l'invention est la fourniture d'une maquette tutorielle permettant à l'utilisateur soumis à la procédure d'enregistrer des rushs, sous forme de vidéo ou de photographies, lesquels seront ensuite intégrés à un squelette non-personnalisé pour constituer un film ou une succession d'images ou une image personnalisé(e). Ainsi, l'invention fournit un moyen vidéo ou photographique permettant de placer et/ou de faire agir un utilisateur dans une situation contextuelle déterminée, notamment pour son apprentissage de gestes professionnels, en particulier de gestes professionnels liés à la sécurité.

Le document WO 2006108236 décrit un procédé et un dispositif qui permettent de commander le mouvement d'une image sur un moyen d'affichage en générant un ou plusieurs mouvements prédéterminés par l'image et en générant des sons associés avec le mouvement, mais il ne concerne pas la personnalisation d'un film. En particulier, il ne décrit pas les moyens vidéo pour déterminer l'action de l'utilisateur dans une situation contextuelle, qui servent à intégrer correctement les rushs filmés dans le squelette.

### DESCRIPTION DE L'INVENTION

Ainsi, l'invention a pour objet une maquette d'enregistrement de plans et/ou séquences et/ou photographies, qui seront ensuite intégrés dans un squelette prédéfini, pour former un film ou une succession d'images ou une image telle que définie dans les revendications indépendantes 1 et 7.

### Maquette

Selon un premier aspect, l'invention a pour objet la mise à la disposition d'un utilisateur d'une maquette tutorielle comprenant au moins un plan muni d'un gabarit d'assistance à l'enregistrement. Ce plan, une fois enregistré, est nommé un «rush». Ce rush est destiné à être intégré dans un squelette, tel que défini dans la section « Définitions » ci-dessous, pour former un film ou une succession d'images ou une image personnalisée).

Suivant un mode de réalisation préféré, la maquette est mise à la disposition de l'utilisateur au moyen d'un logiciel applicatif développé pour être installé sur une plateforme mobile, définie comme étant un appareil électronique mobile comprenant, non limitativement, un assistant personnel, un appareil photographique, un téléphone portable, un « smartphone » ou « ordiphone », une tablette ou un baladeur numérique. Suivant un mode de réalisation préféré, le logiciel applicatif est une application mobile téléchargeable sur un ordinateur, de préférence un ordinateur de poche, très préférentiellement une tablette ou un smartphone (ordiphone), comprenant un système d'exploitation d'applications mobiles, une caméra et des moyens d'enregistrer une vidéo et/ou des photographies. Selon un mode de réalisation, la plateforme mobile comprend une fonction d'enregistrement du plan filmé ou photographié par l'utilisateur, lequel est appelé « rush ». Selon un mode de réalisation, la plateforme mobile comprend une fonction de visualisation du rush enregistré par l'utilisateur. La plateforme mobile comprend également une fonction de réenregistrement du rush, écrasant le rush précédent considéré insatisfaisant par l'utilisateur.

Selon un premier mode de réalisation de l'invention, la maquette comprend au moins un plan qui, lui-même, comprend un gabarit d'assistance comprenant un ou plusieurs éléments de gabarit (ou « éléments ») du plan à enregistrer, lesquels sont la représentation graphique et/ou schématique d'une caractéristique dudit plan à enregistrer. Ce gabarit comporte notamment les contraintes nécessaires pour que les plans et/ou séquences et/ou photographies enregistrées par l'utilisateur puissent se réintégrer dans le squelette. Non limitativement, ces éléments de gabarit comprennent ou sont un calque d'assistance, c'est-à-dire la représentation graphique et/ou schématique du contour d'un objet ou d'une personne, et au moins un autre élément qui représente une caractéristique du plan choisie parmi : une durée, une focale, un positionnement dans le cadre, un mouvement, une lumière, un contraste, un format d'orientation du cadre (vertical ou horizontal), un format de cadrage et un format d'image. Selon un autre mode de réalisation, le plan comprend au moins un calque d'assistance, un élément représentant une durée et un élément représentant un format d'orientation du cadre. Selon un autre mode de réalisation, le plan comprend au moins un calque d'assistance, et des éléments représentant une durée, un format d'orientation du cadre et un format d'image.

Selon un mode de réalisation, l'élément représentant une durée est une ligne de temps. Selon un mode de réalisation, l'élément représentant un mouvement que doit réaliser l'utilisateur est une flèche. Selon un mode de réalisation, l'élément est une zone informative en image fixe ou animée. Selon un mode de réalisation, l'élément comporte un lien hypertexte (ou hyperlien).

Dans un mode de réalisation, la maquette contient au moins une séquence comprenant plusieurs plans à enregistrer, suivant un ordre ou une chronologie définis. Dans un mode de réalisation, la maquette n'impose pas d'enregistrer les plans dans l'ordre ou la chronologie définis.

Suivant un mode de réalisation, l'utilisateur est un technicien, un patient, un soignant, du personnel navigant dans des aéronefs, ou un individu confronté à une situation nécessitant l'apprentissage ou le respect d'une procédure.

Ainsi, la maquette tutorielle selon l'invention est destinée à être enregistrée puis intégrée dans un squelette pour former un film ou une succession d'images ou une image personnalisé(e), ladite maquette comprenant au moins un plan muni d'un gabarit d'assistance à l'enregistrement et ladite maquette étant à la disposition d'un utilisateur sur une application mobile.

### Film personnalisé

Selon un second aspect, l'invention a pour objet un film personnalisé comprenant un squelette et des rushes résultant de l'enregistrement d'une maquette telle que décrite ci-dessus. Le film personnalisé est caractérisé en ce qu'il comprend un squelette et des rushes intégrés dans ledit squelette, lesdits rushes étant réalisés à partir d'une maquette comprenant au moins un plan muni d'un gabarit d'assistance à l'enregistrement, ledit enregistrement étant un rush intégrable dans un squelette pour faire un film personnalisé. Avantageusement, le film personnalisé est tel qu'au moins 10% des plans, de préférence au moins 20% des plans, très préférentiellement au moins 40% des plans sont des rushes.

Suivant un mode de réalisation, au moins un plan et/ou une séquence de la maquette du film se réfère à une zone d'un site industriel ou hospitalier, par exemple considérée comme une zone à risque. Suivant un autre mode de réalisation, les plans et/ou séquence de la maquette du film se réfèrent à des portraits du personnel travaillant sur une zone. Suivant un mode de réalisation, au moins 10%, de préférence au moins 20%, plus préférentiellement, au moins 40% du film est personnalisé.

### Méthode de conception d'un film personnalisé

Selon un troisième aspect, l'invention comprend une méthode de conception d'un film personnalisé comprenant les étapes concomitantes ou successives suivantes :
1) l'écriture d'un scénario, comprenant au moins une scène ou une séquence, ledit scénario prévoyant, dès son écriture, la personnalisation de certains plans,
2) la création d'un storyboard (ou « scénarimage ») comprenant l'identification des plans à personnaliser, c'est-à-dire des plans à partir desquels seront créés des gabarits, et en particulier des calques d'assistance à l'enregistrement,
3) la réalisation d'un film comprenant tous les plans, puis la création du squelette, qui est le film avant personnalisation duquel on a retiré les plans à personnaliser qui formeront la maquette, et réservé des espaces correspondant pour les rushes,
4) la création d'une maquette à partir des plans à personnaliser, par création d'au moins un gabarit, et en particulier d'au moins un calque d'assistance,
5) la réception des rushes filmés par l'utilisateur,
6) l'intégration desdits rushes dans le squelette pour former un film personnalisé.

Suivant un mode de réalisation particulier, le scénario contient au moins une scène scénarisant tout ou partie d'une situation de risque industriel.

### Succession d'images ou image personnalisée

Selon un quatrième aspect, l'invention a pour objet une succession d'images ou une image personnalisée, comprenant un squelette et des rushes résultant de l'enregistrement d'une maquette telle que décrite ci-dessus. La succession d'images ou l'image personnalisée est caractérisée en ce qu'elle comprend un squelette et des rushes intégrés dans ledit squelette, lesdits rushes étant réalisés à partir d'une maquette comprenant au moins un plan muni d'un gabarit d'assistance à l'enregistrement, ledit enregistrement étant un rush intégrable dans un squelette pour créer une succession d'images ou une image personnalisée. Avantageusement, la succession d'images ou l'image personnalisée est telle qu'au moins 10% des plans, de préférence au moins 20% des plans, très préférentiellement au moins 40% des plans sont des rushes.

Suivant un mode de réalisation, la succession d'images personnalisée est une « bande dessinée », c'est-à-dire une succession d'images fixes, telles que des dessins et/ou des photographies, lesquelles sont articulées en séquences narratives et peuvent être accompagnées de textes (narrations, dialogues, onomatopées). Suivant un autre mode de réalisation, la succession d'images personnalisée est projetée dans un ordre prédéterminé sur un moyen d'affichage. Suivant un autre mode de réalisation, l'ordre dans lequel les images de la succession d'images personnalisée sont projetées sur un moyen d'affichage n'est pas prédéterminé et est déterminé par l'utilisateur. Suivant un mode de réalisation, l'image personnalisée est une affiche.

Suivant un mode de réalisation, la succession d'images ou l'image personnalisée comprend un ou plusieurs plans qui sont extraits d'un film ou d'une succession d'images personnalisé(e) suivant l'un des modes de réalisation de l'invention.

Suivant un mode de réalisation, au moins un plan et/ou une séquence de la maquette de la succession d'images ou de l'image se réfère à une zone d'un site industriel ou hospitalier, par exemple considérée comme une zone à risque. Suivant un autre mode de réalisation, au moins un plan et/ou une séquence de la maquette de la succession d'images ou de l'image se réfère à des portraits du personnel travaillant sur une zone. Suivant un mode de réalisation, au moins 10%, de préférence au moins 20%, plus préférentiellement, au moins 40% de la succession d'images ou de l'image est personnalisée.

### Méthode de conception d'une succession d'images ou image personnalisée

Selon un cinquième aspect, l'invention comprend une méthode de conception d'une succession d'images ou image personnalisée comprenant les étapes concomitantes ou successives suivantes :
1) l'écriture d'un scénario, comprenant au moins un plan ou une séquence, ledit scénario prévoyant la personnalisation de certains plans,
2) la création d'une succession d'images ou d'une image comprenant l'identification des plans à personnaliser, c'est-à-dire des plans à partir desquels seront créés des gabarits, et en particulier des calques d'assistance,
3) la création du squelette, qui est la succession d'images ou l'image avant personnalisation de laquelle on a retiré les plans à personnaliser qui formeront la maquette, et réservé des espaces correspondant pour les rushes,
4) la création d'une maquette à partir des plans à personnaliser, par création d'au moins un gabarit, et en particulier d'au moins un calque d'assistance,
5) la réception du ou des rushe(s) enregistrés par l'utilisateur,
6) l'intégration desdits rushes dans le squelette pour former une succession d'images ou une image personnalisée.

Suivant un mode de réalisation particulier, le scénario contient au moins une scène scénarisant tout ou partie d'une situation de risque industriel.

### Méthode d'accompagnement tutoré à l'enregistrement de plans

Selon un sixième aspect, l'invention concerne une méthode d'accompagnement tutoré (guidé) d'un utilisateur, comprenant la fourniture de la maquette tel que décrite précédemment et optionnellement la fourniture d'un support tutoriel complémentaire.

Dans ce mode de réalisation, l'utilisateur télécharge sur un appareil électronique mobile comprenant une caméra une application mobile comprenant une maquette selon l'invention.

Suivant un mode de réalisation, la méthode propose un support tutoriel complémentaire exposant le contexte opérationnel et/ou le contexte dans lequel l'utilisateur est invité à se placer et/ou le scénario. Suivant un mode de réalisation, un exemple de plans personnalisés est fourni.

### Méthode d'accompagnement tutoré à l'apprentissage de gestes, notamment professionnels ou de sécurité

Selon un septième aspect, l'invention concerne une méthode d'accompagnement tutoré qui peut avoir, non limitativement pour objectif de former, ou d'accompagner un utilisateur à l'apprentissage de gestes, notamment de gestes professionnels.

Cette méthode comprend (1) la fourniture d'une maquette selon l'invention, (2) l'enregistrement par l'utilisateur d'au moins un rush, (3) l'intégration dudit au moins un rush dans un squelette tel que décrit ci-dessus et (4) la restitution à l'utilisateur du film ou de la succession d'images ou de l'image personnalisé(e), résultant de l'intégration des rushes dans le squelette.

### DÉFINITIONS

Dans la présente invention, les termes ci-dessous sont définis de la manière suivante :
- Le terme « **plan** » se réfère à la plus petite unité d'une production, c'est-à-dire l'unité créatrice du film ou de la succession d'images ou de l'image. Dans le cas d'une vidéo, le plan est généralement défini comme la portion d'action enregistrée sur la pellicule, ou sur un support de stockage magnétique ou numérique, entre un démarrage de la caméra et son arrêt. Dans le cas d'une succession d'images ou d'une image, le plan est l'enregistrement d'une image unique, par exemple une photographie.
- Le terme « **enregistrement** » se réfère à l'acquisition et au stockage d'un plan sur une pellicule ou un support de stockage magnétique ou numérique. Dans le contexte de l'invention, l'enregistrement consiste notamment à filmer ou à prendre une photographie.
- Le terme « **séquence** » se réfère à un ensemble de plans se rapportant à une même action et se déroulant dans le même temps et dans le même lieu.
- Le terme « **scène** » se réfère à une unité dramatique ou de récit constituée d'une séquence ou de l'assemblage de plusieurs séquences situées en plusieurs lieux et/ou en plusieurs temps, et se rapportant à une même action.
- Le terme « **scénario** » se réfère à une succession de séquences ou de scènes.
- Le terme « **film** » se réfère à l'assemblage de plusieurs plans et/ou séquences et/ou scènes.
- Le terme « **succession d'images** » se réfère à l'assemblage de plusieurs plans, lesdits plans ne comportant chacun qu'une seule image.
- Le terme « **image** » se réfère à un plan unique, ledit plan ne comportant qu'une seule image.
- Le terme « **rush** » se réfère à un plan ou séquence enregistré par l'utilisateur et destiné à compléter un squelette. Selon la nature du plan, le rush est une vidéo ou une photographie.
- Le terme « **squelette** » se réfère à un film ou une succession d'images dans lequel sont absents des plans ou des séquences, qui correspondent aux futurs rushes.
- Les termes « **film personnalisé** », ou « **succession d'images personnalisée** », ou « **image personnalisée** » se réfèrent à l'ensemble résultant de l'intégration des rushes dans le squelette du film, ou de la succession d'images, ou de l'image.
- Les termes « **maquette** » ou « **maquette tutorielle** » sont synonymes et se réfèrent à une succession de plans comprenant au moins un gabarit d'assistance à l'enregistrement; préférentiellement, une maquette contient l'ensemble des plans nécessaires pour compléter un squelette.
- Les termes « **gabarit** » ou « **gabarit d'assistance** » ou « **gabarit d'assistance à l'enregistrement** » sont synonymes et se réfèrent à un ensemble comportant un ou plusieurs éléments de gabarit (ou « éléments ») d'un plan, tels que définis ci-dessous.
- Les termes « **élément de gabarit** » ou « **élément** » sont synonymes et se réfèrent à la représentation graphique et/ou schématique d'une caractéristique d'un plan dont la connaissance permet l'intégrabilité des rushes dans le squelette. Non limitativement, les caractéristiques pouvant être représentées au moyen d'un élément de gabarit sont notamment : positionnement dans le cadre, durée, format de cadrage, format d'orientation verticale ou horizontale du cadre (paysage ou portrait), mouvement, format d'image, focale, contraste, et plus généralement toutes les caractéristiques nécessaires à l'intégrabilité des rushes dans le squelette. L'intégrabilité inclut notamment d'assurer la continuité de l'image et de l'action.
- Les termes « **calque** » ou « **calque d'assistance** » sont synonymes et se réfèrent à la représentation graphique et/ou schématique du contour d'un objet ou d'une personne, dessiné à partir d'un objet ou d'une personne réels et en retraçant au moins les contours. Le calque est un élément de gabarit qui sert à matérialiser quelle doit être la position d'un objet ou d'une personne dans le cadre.
- Le terme « **ligne de temps** » se réfère à la représentation graphique et/ou schématique de la durée d'enregistrement d'un plan.
- Le terme « **application mobile** » se réfère à un logiciel applicatif développé pour être installé sur un appareil électronique mobile comprenant une caméra.
- Le terme « **appareil électronique mobile comprenant une caméra** » se réfère à un assistant personnel, un téléphone portable, un « smartphone » ou téléphone muni d'un système d'exploitation d'applications mobiles et d'une caméra, ou un baladeur numérique muni d'une caméra.
- Les termes « **storyboard** » ou « **scénarimage** » sont synonymes et se réfèrent à a) la représentation graphique (dessin) ou la shotlist (liste de tournage) de tout ou partie des plans de la scène ou de la séquence, et b) l'ensemble des caractéristiques nécessaires à l'intégrabilité des plans entre eux.
- Le terme « **tutoriel** » se réfère à un document, film, ou logiciel permettant d'acquérir une compétence technique, ou à un guide d'initiation et d'aide à l'utilisation d'un produit ou d'un service.

### BRÈVE DESCRIPTION DES FIGURES

La **Figure 1** est une représentation de deux plans sur lesquels apparaissent des éléments de gabarit.
La **Figure 2** est une représentation d'un squelette de film.
La **Figure 3** est la représentation d'un squelette et des rushes correspondants aux espaces laissés vacants.
La **Figure 4** est un exemple de maquette selon l'invention.
La **Figure 5** est un exemple de réalisation d'un calque d'assistance.
La **Figure 6** est une succession d'images comportant des plans sur lesquels apparaissent des éléments de gabarit.
La **Figure 7** est une image comportant un plan sur lequel apparaissent des éléments de gabarit.

### EXEMPLES

La présente invention se comprendra mieux à la lecture des exemples suivants qui se lisent en référence aux figures, et illustrent non-limitativement l'invention.

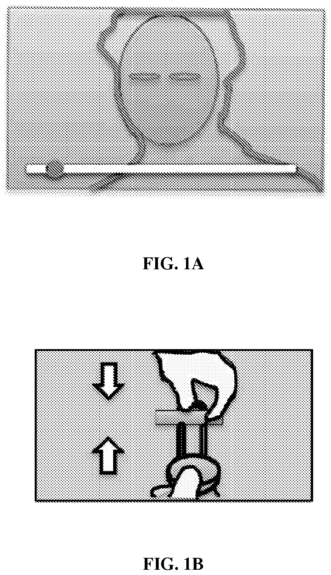

La **Figure 1** montre un plan (**1A**) muni d'un gabarit qui comprend, non limitativement,
- un calque d'assistance, représentation schématique du haut d'un corps humain, comprenant un visage avec deux représentations d'yeux qui regardent en face,
- un rectangle représentant un format d'orientation horizontal, dit orientation paysage, pour filmer le plan, et
- une ligne de temps, qui représente la durée prédéterminée pendant laquelle le plan doit être filmé.

L'utilisateur, mis en présence de ce gabarit, sait donc qu'il doit filmer, pendant une durée déterminée par la ligne de temps, le haut d'un corps humain, placer le visage de l'humain dans l'ovale, et maintenir la plateforme mobile en position horizontale. Son enregistrement de rush est donc tutoré (guidé).

La **Figure 1** montre également un plan (**1B**), qui comprend un calque représentant schématiquement une main gauche actionnant dans le sens de la flèche (i.e. vers le bas) l'extrémité supérieure d'un cadenas de consignation, et un doigt de la main droite actionnant dans le sens de l'autre flèche (i.e. vers le haut) l'extrémité inférieure dudit cadenas. Les flèches sont les éléments de gabarit qui représentent le sens du mouvement à accomplir, tandis que le calque indique à l'utilisateur la position que doivent prendre ses mains.

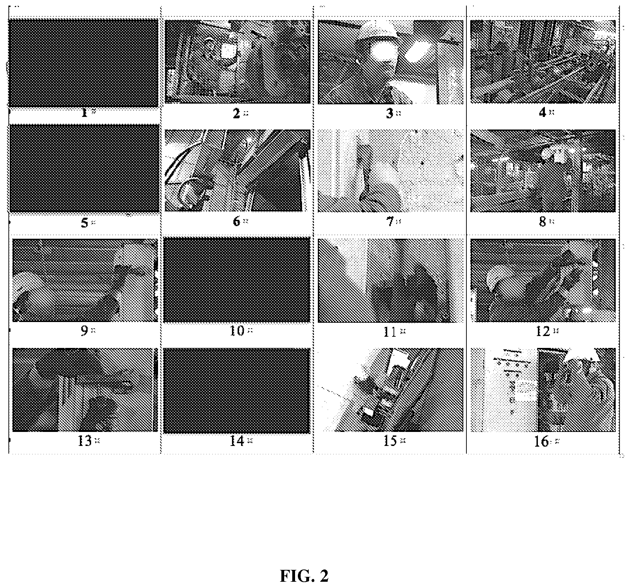

La **Figure 2** montre un squelette, à savoir un film dans lequel des plans destinés à la personnalisation ont été ôtés. Ce squelette comprend 16 plans dont 4 plans noirs; lesdits plans noirs sont les espaces vacants laissés par les plans numérotés 1, 5, 10 et 14 qui ont été retirés. Ces espaces vacants seront complétés lors de l'introduction ultérieure des rushes filmés par un utilisateur, qui sont les rushes qui correspondent aux plans ôtés.

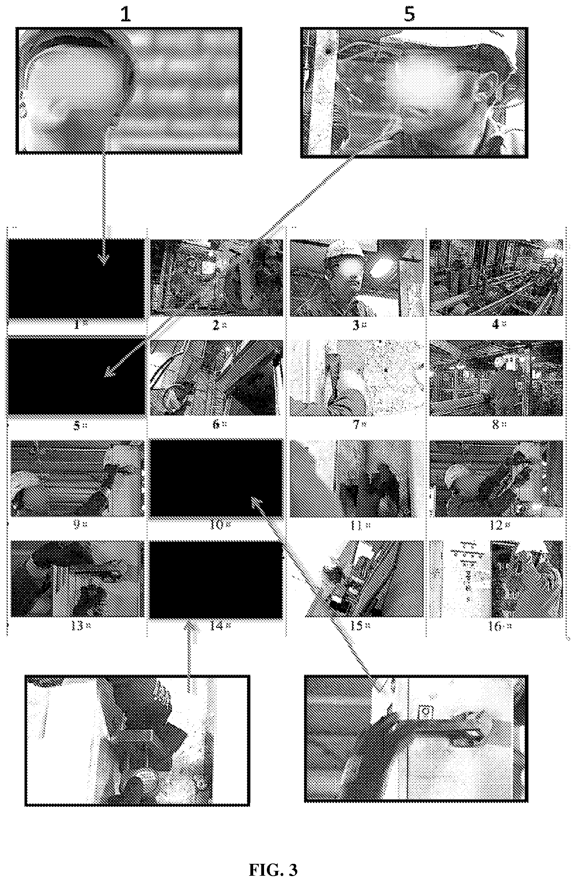

La **Figure 3** montre un film personnalisé en cours de construction, dans lequel des rushes sont en cours d'intégration dans un squelette, à la place des espaces laissés vacants lorsque les plans destinés à la personnalisation ont été ôtés.

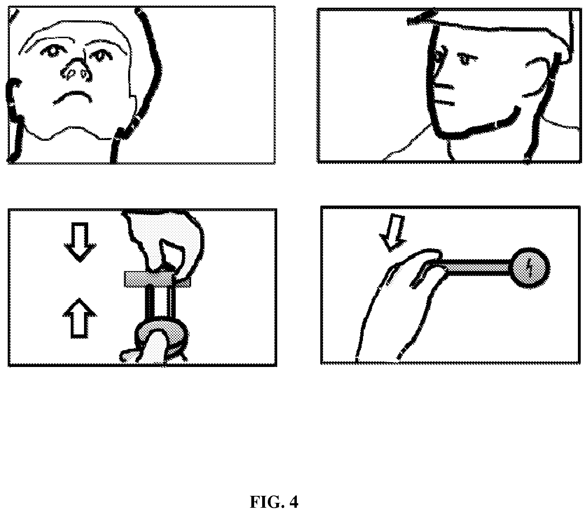

La **Figure 4** montre une maquette tutorielle selon l'invention, destinée à guider un utilisateur dans son activité de filmer une situation, et destinée également à lui faire apprendre un geste industriel, à savoir la pose d'un cadenas de consignation sur un tableau électrique avant une intervention sur machine. Les gabarits de cette maquette comprennent tous un calque qui représente soit la position que doit prendre l'utilisateur dans le cadre, soit celle de l'objet qu'il doit manipuler pour réaliser le geste industriel. Certains gabarits comportent aussi un élément (flèche) qui représente le mouvement que doit réaliser l'utilisateur pour poser le cadenas de consignation.

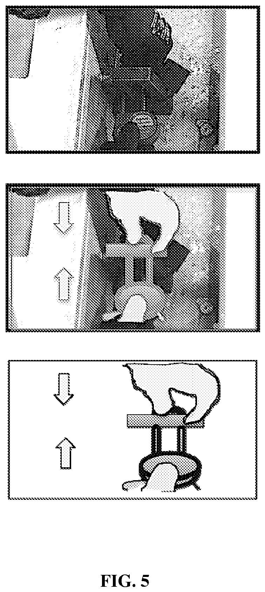

La **Figure 5** montre la réalisation d'un gabarit à partir d'un plan issu d'un film, ledit plan montrant l'accomplissement d'un geste professionnel. Un calque est réalisé en traçant les contours des mains de la personne qui accomplit le geste. Des éléments de gabarit matérialisant le mouvement (flèches) sont créés et orientés dans la direction du mouvement que font les mains de la personne quand elle accomplit le geste.

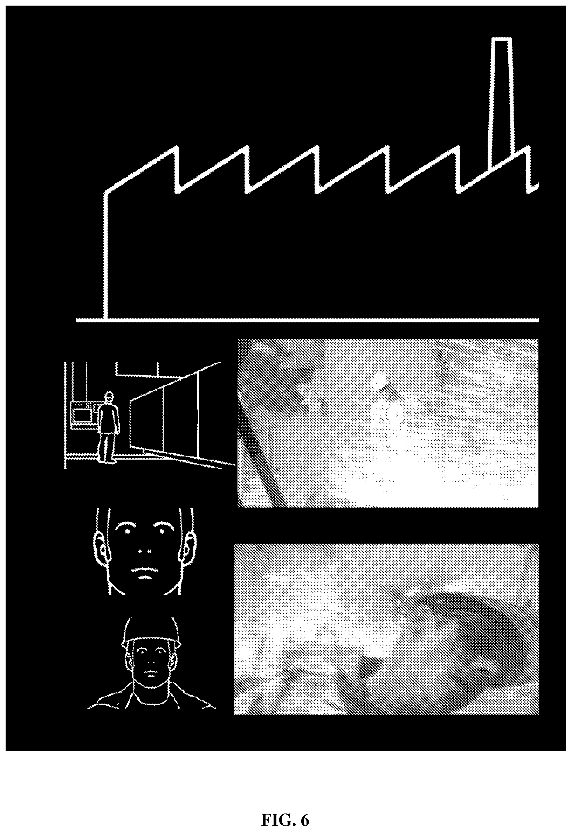

La **Figure 6** montre une succession d'images de type « bande dessinée », comportant six plans, dont quatre plans sur lesquels apparaissent des éléments de gabarit. Le plan du haut comporte un calque représentant la forme d'une usine. Les trois plans placés en bas à gauche comportent un calque représentant respectivement, de haut en bas : un utilisateur dans son environnement de travail, le visage d'un utilisateur en gros plan, le haut du corps d'un utilisateur (buste). Les deux plans placés à droite sont des photographies qui ne sont pas personnalisables.

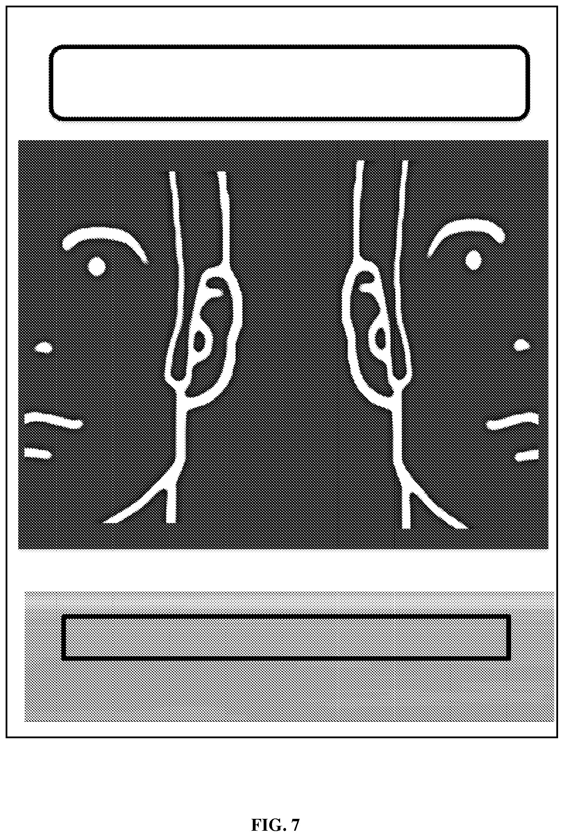

La **Figure 7** est une image comportant un plan sur lequel apparaissent des éléments de gabarit. Le calque représente la moitié du visage de deux utilisateurs différents. Les cadres en haut et en bas de l'image ont vocation à être complétés par du texte et/ou des images, par exemple le nom d'une entreprise et son logo, ou un slogan relatif à la sécurité ou à la motivation des utilisateurs.

## Revendications

1. Maquette apte à guider un utilisateur pour l'obtention d'un rush, le rush étant un plan enregistré résultant de l'enregistrement d'un plan à enregistrer qui est filmé ou photographié par l'utilisateur, le rush étant destiné à compléter un squelette de film ou de succession d'images ou une image dans lequel au moins un espace correspondant au rush a été laissé vacant, pour former un film ou une succession d'images ou une image personnalisé(e), la maquette étant **caractérisée en ce qu'**elle comprend au moins un plan muni d'un gabarit d'assistance comprenant au moins un élément de gabarit du plan à enregistrer assurant que le plan enregistré puisse se réintégrer dans le squelette, le gabarit d'assistance comprenant au moins un calque d'assistance matérialisant quelle doit être la position d'un objet ou d'une personne dans le cadre et au moins un élément qui représente une caractéristique du plan choisie parmi : une durée, une focale, un mouvement, une lumière, un contraste, un format de cadrage, un format d'orientation du cadre et un format d'image.

2. Maquette selon la revendication **1, caractérisée en ce que** le calque d'assistance est une représentation graphique et/ou schématique du contour d'un objet ou d'une personne.

3. Maquette selon l'une quelconque des revendications **1** ou **2, caractérisée en ce que** la maquette comprend au moins une séquence, ladite séquence comprenant au moins un plan muni dudit gabarit d'assistance à l'enregistrement.

4. Film vidéo, ou succession d'images, **caractérisé en ce qu'**il comprend au moins un rush obtenu à l'aide d'une maquette selon l'une quelconque des revendications **1** à **3.**

5. Succession d'images selon la revendication **4, caractérisée en ce qu'**elle est une bande dessinée.

6. Succession d'images ou image comprenant au moins un plan, **caractérisée en ce que** ledit plan est extrait d'un film selon la revendication **4.**

7. Méthode de conception d'un film ou une succession d'images ou une image personnalisé(e), comprenant les étapes suivantes :
- l'écriture d'un scénario comprenant au moins un plan, ledit scénario prévoyant la personnalisation de certains plans ;
- l'identification des plans à personnaliser, c'est-à-dire des plans à partir desquels seront créés des gabarits, et en particulier des calques d'assistance ;
- la création d'un film ou une succession d'images ou une image comprenant tous les plans du scénario ;
- la création d'un squelette en retirant les plans à personnaliser du film ou de la succession d'images ou de l'image, et en réservant des espaces correspondants pour des rushes, chaque rush étant un plan enregistré résultant de l'enregistrement d'un plan à enregistrer qui est filmé ou photographié par un utilisateur ;
- la création d'une maquette à partir des plans à personnaliser, par création d'au moins un gabarit comprenant pour chaque plan à enregistrer au moins un calque d'assistance matérialisant quelle doit être la position d'un objet ou d'une personne dans le cadre, et au moins un élément qui représente une caractéristique du plan choisie parmi : une durée, une focale, un mouvement, une lumière, un contraste, un format de cadrage, un format d'orientation du cadre et un format d'image ;
- la réception d'au moins un rush obtenu par l'utilisateur à l'aide de la maquette ;
- l'intégration dudit rush dans le squelette pour former un film ou une succession d'images ou une image personnalisé(e).

## Patentansprüche

1. Modell, das in der Lage ist, einen Benutzer beim Erhalten eines Rushes zu führen, wobei das Rush eine aufgezeichnete Einstellung ist, die aus der Aufzeichnung einer aufzuzeichnenden Einstellung resultiert, welche vom Benutzer gefilmt oder fotografiert wird, wobei das Rush dazu bestimmt ist, ein Filmgerüst oder eine Bildfolge oder ein Bild zu vervollständigen, in dem mindestens ein Raum, der dem Rush entspricht, freigelassen wurde, um einen personalisierten Film oder eine personalisierte Bildfolge oder ein personalisiertes Bild zu bilden, wobei das Modell **dadurch gekennzeichnet ist, dass** es mindestens eine Einstellung umfasst, die mit einer Hilfsvorlage ausgestattet ist, welche mindestens ein Vorlagenelement der aufzuzeichnenden Einstellung umfasst, das sicherstellt, dass sich die aufgezeichnete Einstellung in das Gerüst reintegrieren kann, wobei die Hilfsvorlage mindestens eine Hilfsebene umfasst, die konkretisiert, welches die Position eines Objekts oder einer Person im Kader sein muss, und mindestens ein Element, das ein Kennzeichen der ausgewählten Einstellung darstellt, ausgewählt aus: einer Dauer, einer Brennweite, einer Bewegung, einem Licht, einem Kontrast, einem Kadrage-Format, einem Ausrichtungsformat des Kaders und einem Bildformat.

2. Modell nach Anspruch **1, dadurch gekennzeichnet, dass** die Hilfsebene eine grafische und/oder schematische Darstellung des Umrisses eines Objekts oder einer Person ist.

3. Modell nach einem der Ansprüche **1** oder **2, dadurch gekennzeichnet, dass** das Modell mindestens eine Sequenz umfasst, wobei die Sequenz mindestens eine Einstellung umfasst, die mit der Hilfsvorlage für die Aufzeichnung ausgestattet ist.

4. Videofilm oder Bildfolge, **dadurch gekennzeichnet, dass** er/sie mindestens ein Rush umfasst, das mit Hilfe eines Modells nach einem der Ansprüche **1** bis **3** erhalten wird.

5. Bildfolge nach Anspruch **4, dadurch gekennzeichnet, dass** sie ein Zeichentrick ist.

6. Bildfolge oder Bild, die/das mindestens eine Einstellung umfasst, **dadurch gekennzeichnet, dass** die Einstellung aus einem Film nach Anspruch **4** extrahiert wird.

7. Verfahren zur Konzeptionierung eines personalisierten Films oder einer personalisierten Bildfolge oder eines personalisierten Bildes, das die folgenden Schritte umfasst:
- das Schreiben eines Drehbuchs, das mindestens eine Einstellung umfasst, wobei das Drehbuch die Personalisierung gewisser Einstellungen vorsieht;
- das Identifizieren der Einstellungen, die personalisiert werden sollen, das heißt der Einstellungen, auf deren Grundlage Vorlagen, und insbesondere Hilfsebenen erstellt werden;
- das Erstellen eines Films oder einer Bildfolge oder eines Bildes, der/die/das alle die Einstellungen des Drehbuchs umfasst;
- das Erstellen eines Gerüsts unter Herausziehen der Einstellungen, die personalisiert werden sollen, aus dem Film oder der Bildfolge oder dem Bild, und unter Beibehalten der entsprechenden Räume für Rushes, wobei jedes Rush eine aufgezeichnete Einstellung ist, die aus der Aufzeichnung einer aufzuzeichnenden Einstellung resultiert, welche von einem Benutzer gefilmt oder fotografiert wird;
- das Erstellen eines Modells auf Grundlage der Einstellungen, die personalisiert werden sollen, durch Erstellen mindestens einer Vorlage, die für jede Einstellung, die aufgezeichnet werden soll, mindestens eine Hilfsebene umfasst, die konkretisiert, welches die Position eines Objekts oder einer Person im Kader sein muss, und mindestens ein Element, das ein Kennzeichen der Einstellung darstellt, ausgewählt aus: einer Dauer, einer Brennweite, einer Bewegung, einem Licht, einem Kontrast, einem Kadrage-Format, einem Ausrichtungsformat des Kaders und einem Bildformat;
- das Empfangen mindestens eines Rushes, das vom Benutzer mit Hilfe des Modells erhalten wird;
- das Integrieren des Rushes in das Gerüst, um einen personalisierten Film oder eine personalisierte Bildfolge oder ein personalisiertes Bild zu bilden.

## Claims

1. Model suitable to guide a user for obtaining a rush, the rush being a recorded frame resulting from the recording of a frame to be recorded which is filmed or photographed by the user, the rush being intended to complete a framework of a film or a series of images or an image in which at least one space corresponding to the rush has been left vacant, in order to form a personalized film or a personalized series of images or a personalized image, the model being **characterized in that** it comprises at least one frame provided with an assistance template comprising at least one template element of the frame to be recorded ensuring that the recorded frame can be reintegrated into the framework, the assistance template comprising at least one assistance tracing indicating what should be the position of an object or a person in the framing and at least one element which represents a characteristic of the frame chosen from: a duration, a focal length, a movement, a light, a contrast, a framing format, a box orientation format and an image format.

2. Model according to claim **1, characterized in that** the assistance tracing is a graphic and/or schematic representation of the outline of an object or a person.

3. Model according to any one of claims **1** or **2, characterized in that** the model comprises at least one sequence, said sequence comprising at least one frame provided with said recording assistance template.

4. Video film or series of images, **characterized in that** it comprises at least one rush obtained using a model according to any one of claims **1** to **3.**

5. Series of images according to claim **4, characterized in that** it is a comic strip.

6. Series of images or image comprising at least one frame, **characterized in that** said frame is extracted from a film according to claim **4.**

7. Method of designing a personalized film or a personalized series of images or a personalized image, comprising the following steps:
- the writing a scenario including at least one frame, said scenario providing for the personalization of certain frames;
- the identification of the frames to be personalized, *i.e.,* the frames from which templates will be created, and in particular assistance tracing;
- the creation of a film or a series of images or an image comprising all the frames of the scenario;
- the creation of a framework by removing the frames to be personalized from the film or series of images or image, and by reserving corresponding spaces for rushes, each rush being a recorded frame resulting from the recording of a frame to be recorded which is filmed or photographed by a user;
- the creation of a model from the frames to be personalized, by creation of at least one template comprising for each frame to be recorded at least one assistance tracing indicating what should be the position of an object or a person in the framing, and at least one element which represents a characteristic of the frame chosen from: a duration, a focal length, a movement, a light, a contrast, a framing format, a box orientation format and an image format;
- the reception of at least one rush obtained by the user using the model;
- the integration of said rush in the framework to form a personalized film or a personalized series of images or a personalized image.
